## Europäisches Patentamt

## European Patent Office

## Office européen des brevets

(19)

(11) **EP 1 262 337 A2**

(12) **EUROPEAN PATENT APPLICATION**

(43) Date of publication:
04.12.2002 Bulletin 2002/49

(51) Int Cl.⁷: **B60C 15/06**, B60C 9/00,
D07B 1/06

(21) Application number: 02011763.6

(22) Date of filing: 27.05.2002

| (84) Designated Contracting States:<br>**AT BE CH CY DE DK ES FI FR GB GR IE IT LI LU**<br>**MC NL PT SE TR**<br>Designated Extension States:<br>**AL LT LV MK RO SI**<br><br>(30) Priority: 28.05.2001 JP 2001159524<br>28.05.2001 JP 2001159527<br>30.08.2001 JP 2001261990 | (71) Applicant: **Sumitomo Rubber Industries Ltd.**<br>**Kobe-shi, Hyogo-ken (JP)**<br><br>(72) Inventor: **Yoshioka, Shigeki,**<br>**c/o Sumitomo Rubber Ind.,Ltd.**<br>**Kobe-shi, Hyogo-ken (JP)**<br><br>(74) Representative:<br>**Manitz, Finsterwald & Partner GbR**<br>**Postfach 31 02 20**<br>**80102 München (DE)** |

(54) **Pneumatic tire**

(57)    A pneumatic tire comprises a carcass ply (6) extending between bead portions and turned up around a bead core (5) in each bead portion from the inside to the outside of the tire to form a pair of turned up portions (6b) and a main portion (6a) therebetween, and a bead reinforcing layer (9) made of steel cords and disposed axially outside the turned up portion in each bead portion, wherein each of the steel cords is made of steel filaments gathered together to have a shape index in a range of from 0.35 to 0.70, the shape index is the total of squared filament diameter of all the steel filaments which total is divided by the product of L1 and L2, wherein, in a cross section at a right angle to the longitudinal direction of the cord, L1 is the dimension of largest measure which occurs in one direction, and L2 is the dimension measured perpendicularly to this direction.

Fig.4

**Description**

The present invention relates to a pneumatic tire more particularly to a bead structure being capable of improving the bead durability.

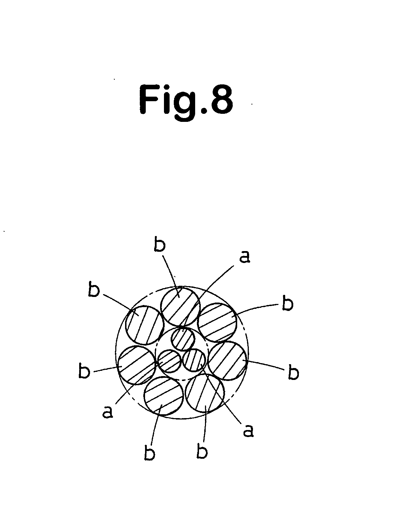

In the pneumatic tire especially heavy duty tire, it is important to reinforce the bead portion to withstand a heavy tire load. In case of heavy duty radial tires, therefore, the bead portion is usually provided with a bead reinforcing layer made of steel cords. For such steel cords, hitherto, cord structures of the layer twist type such as 3+7 structure, 3+9 structure and 3+9+15 structure are widely used. For example, the 3+7 structure is such that the cord is composed of a core made of three steel filaments (a) and a sheath made of seven steel filaments (b) twisted around the core as shown in Fig.8.

In such a steel cord, however, under extremely severe service conditions, microscopic initial loose, which occurs between the steel filaments in a part into which rubber can not penetrate, grows into a separation between the cord and rubber, causing a fine groove or crack on the surface of the tire which decrease the bead durability.

In the heavy duty tires such as truck/bus tires, in order to meet marketing needs, it is necessary to further improve the durability of the bead portion.

It is therefore, an object of the present invention to provide a pneumatic tire in which the durability of the bead portion is improved.

According to the present invention, a pneumatic tire comprises

a tread portion,
a pair of sidewall portions,
a pair of bead portions each with a bead core therein,
a carcass ply extending between the bead portions and turned up around the bead core in each of the bead portions from the inside to the outside of the tire to form a pair of turned up portions and a main portion therebetween, and
a bead reinforcing layer made of steel cords and disposed axially outside the turned up portion in each of the bead portions,
the steel cords each made of steel filaments gathered together to have a shape index in a range of from 0.35 to 0.70, wherein the shape index is the total of squared filament diameter of all the steel filaments which total is divided by the product of L1 and L2, wherein, in a cross section at a right angle to the longitudinal direction of the cord, L1 is the dimension of largest measure which occurs in one direction, and L2 is the dimension measured perpendicularly to this direction.

Embodiments of the present invention will now be described in detail in conjunction with the accompanying drawings, wherein:

Fig.1 is a cross sectional view of a pneumatic tire according to the present invention;
Fig.2 is an enlarged cross sectional view of a steel cord for the bead reinforcing layer;
Fig.3 is an enlarged cross sectional partial view of a strip of rubberized steel cords for the bead reinforcing layer;
Fig.4 is an enlarged cross sectional view of the bead portion of the tire shown in Fig.1;
Figs.5, 6 and 7 are cross sectional views each showing another example of the bead portion; and
Fig.8 is an enlarged cross sectional view of a steel cord of 3+7 structure.

In the drawings, pneumatic tire 1 according to the present invention comprises a tread portion 2, a pair of axially spaced bead portions 4 each with a bead core 5 therein, a pair of sidewall portions 3 extending between the tread edges and the bead portions, a carcass 6 extending between the bead portions 4, and a belt 7 disposed radially outside the carcass 6 in the tread portion 2.

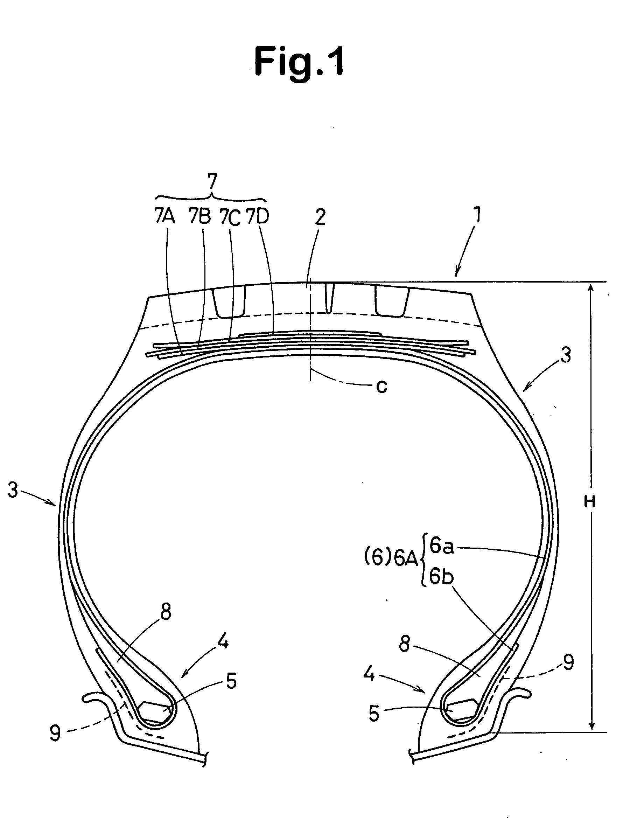

Fig.1 shows a meridian section of the tire under a normally inflated unloaded state in which the tire 1 is mounted on a standard rim J and inflated to a standard pressure but loaded with no tire load. The undermentioned tire section height H, carcass turned up height h1, bead reinforcing layer heights h2 and h3 are measured in this state.

The carcass 6 comprises at least one ply 6A of rubberized cords arranged radially at an angle of 90 to 70 degrees with respect to the tire equator, and extending between the bead portions 4 through the tread portion 2 and sidewall portions 3, and turned up around the bead core 5 in each bead portion 4 from the inside to the outside of the tire so as to form a pair of turned up portions 6b and one main portion 6a therebetween. The carcass 6 in this example is composed of a single ply 6A of steel cords arranged radially at 90 degrees.

It is preferable that the radially outer end 6be of the turned up portion 6b is positioned at a height h1 in a range of from 10 to 30 %, preferably 15 to 25 % of the tire section height H, each from the bead base line BL. If the height h1 is less than 10 %, the bending rigidity of the bead portion 4 becomes insufficient. If the height h1 is more than 30 %, the radially outer edge 6be of the turned up portion 6b reaches to a sidewall region subjected to a large bending deformation.

Therefore, it is not preferable.

Between the main portion 6a and turned up portion 6b, there is disposed a bead apex 8 made of a hard rubber extending radially outwards from the bead core 5 while tapering toward its radially outer end.

The belt 7 comprises at least two cross breaker plies. It is possible that the belt 7 further comprises a band ply whose cord angle is almost zero with respect to the tire equator. In this example, the belt 7 is composed of four breaker plies: the radially innermost ply 7A of parallel cords laid at an angle of from 45 to 75 degrees and radially outer plies 7B, 7C and 7D of parallel cords laid at an angle of from 10 to 30 degrees with respect to the tire equator. For the breaker cords, a steel cord is used.

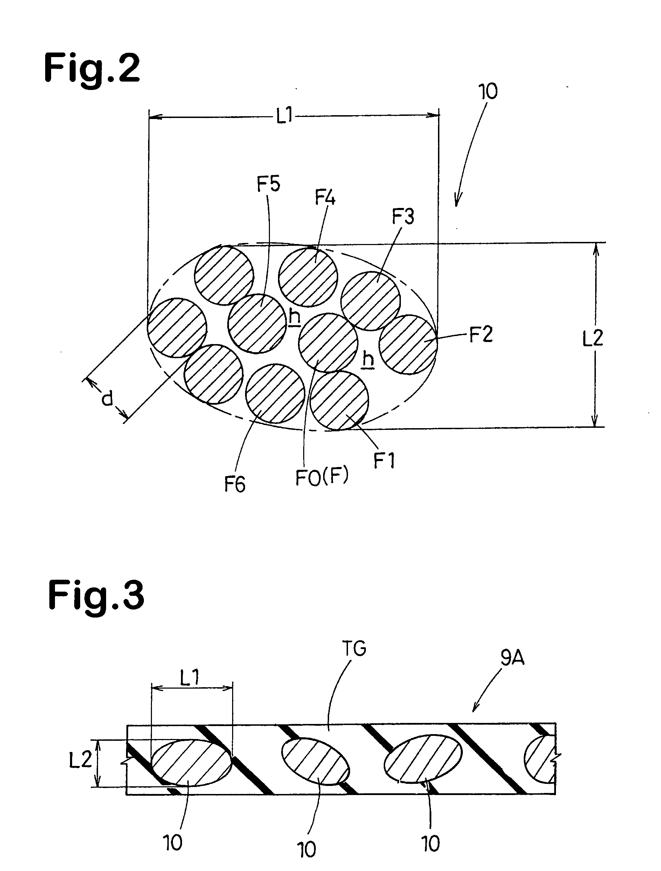

The bead portions 4 are each provided with a bead reinforcing layer 9. The bead reinforcing layer 9 is made of a strip of rubberized steel cords 10 laid parallel with each other and covered with topping rubber TG as shown in Fig.3. Fig.3 shows a cross sectional view of the strip taken along a direction perpendicular to the longitudinal direction of the steel cords 10.

The bead reinforcing layer has a main part 9b disposed along the axially outside of the carcass turned up portion 6b. wherein the steel cords 10 are inclined at an angle θ in a range of from 10 to 40 degrees, preferably 15 to 35 degrees with respect to the circumferential direction of the tire.

In this example, as the carcass cords are arranged radially at 90 degrees, the steel cords in the main part 9b cross the carcass cords in the carcass turned up portion 9b at an angle (90-θ) of from 80 to 50 degrees.

If the angle θ exceeds 40 degrees, the bead portion tends to excessively increase its bending rigidity and deteriorate ride comfort. If the angle θ is less than 10 degrees, it becomes difficult to reinforcing the bead portion.

The radially outer end 9o of the main part 9b is positioned radially inside the radially outer end 6be of the carcass ply turned up portion 6b, and the height h2 from the bead base line BL is preferably set in a range of from 7 to 30 %, preferably 9 to 28 % of the tire section height H. If the height h2 is less than 7% of the tire section height H, it is difficult to improve the bending rigidity of the bead portion 4. If the height h2 is more than 30 %, the radially outer end 9o of the main part 9b reaches to a sidewall region subjected to a large bending deformation and a separation failure is liable to start from such end 9o. Thus, it is not preferable.

In the bead reinforcing layer 9, each of the steel cords 10 has a cross sectional shape which is not uniform along the length thereof.

The steel cord 10 is made up of a number (n) of steel filaments F and the cord has to have an open structure in order that the topping rubber can easily penetrate into the cord.

Fig.2 shows a cross sectional view of an example of the steel cord 10 which is made up of ten steel filaments F which is a substitute for the "3+7 structure" conventionally widely used in bead reinforcing layers.

The diameter of each filament F is set in a range of from 0.10 to 0.50 mm, preferably 0.15 to 0.45 mm.

The number (n) of the steel filaments per a cord 10 is preferably set in a range of from 6 to 12.

If the diameter is less than 0.10 mm, the strength of the filament decreases, and the rupture strength of the steel cord 10 is also decreased. If the diameter exceeds 0.50 mm, the bending rigidity of the cord becomes too high, and tire performance such as ride comfort is deteriorated and it becomes difficult to manufacture the tire.

If the number (n) is less than 6, the rupture strength of the steel cord 10 becomes insufficient. If the number (n) is more than 12, the diameter of the cord tends to excessively increase.

According to the present invention, each steel cord 10 has a shape index S in a range of from 0.35 to 0.70, preferably 0.40 to 0.65.

The shape index S is the total of squared filament diameter of all the steel filaments which total is divided by the product of L1 and L2, wherein, in a cross section at a right angle to the longitudinal direction of the cord,

L1 is the dimension of largest measure which occurs in one direction, and

L2 is the dimension measured perpendicularly to this direction.

If all the steel filaments are the same diameter (d), the shape index S is defined by the following equation:

$$S = (d^2 \times n)/(L1 \times L2).$$

If the steel filaments F have different diameters di (i =1 to j), the shape index S is defined by the following equation:

$$S = \Sigma(di^2 \times ni)/(L1 \times L2)$$

wherein

j is the number of the different diameters, and

ni is the number of the steel filament(s) having a diameters di.

It was discovered by the present inventor that the shape index S represents the degree of rubber penetration into the steel cord, and if the shape index S exceeds 0.70, it is very difficult for the rubber to penetrate, and the rubber penetration increases as the shape index S becomes small. When the shape index S is decreased to under 0.35, however, the thickness of the reinforcing layer is increased. Thus, it is not preferable in view of the tire weight, rigidity and the like.

In case of "x+y structure", namely, a layer twist structure in which a number "x" of filaments twisted together are surrounded by a sheath of a number "y" of filaments, it is very difficult to achieve a shape index S under 0.70. Therefore, the layer twist structures are not employed in this invention.

In case of "1xn structure" in which a number "n" of filaments F, namely, all the filaments F as a single bunch are twisted in a "S" or "Z" direction, it is easy to achieve a shape index S under 0.70. Therefore, this structure can be employed in this invention. However, in comparison with the following special twist structure, it is difficult to obtain the desired shape index S stably along the length of the cord because the filaments ate liable to get loose. In this embodiment, therefore, a "1×n structure" is not employed as the structure of the steel cord 10.

Generally speaking, all the filaments in the steel cord 10 are twisted in a "S" or "Z" direction, but during twisting all the filaments, some of them interchange their relative positions at regular or irregular intervals along the length of the cord. (hereinafter, the "interchange bunch twist")

Although, in the "1×n structure", the relative positions of the filaments are not changed in the longitudinal direction of the cord except for the dislocation due to loose,

in the steel cord according to the interchange bunch twist, the relative positions of the filaments are intentionally changed locally and periodically. In one position, a set of two filaments interchange their relative positions. In another position, another set of two filaments interchange their relative positions. As a result, openings (h) into the cord 10 are certainly formed, and the filaments F do not get loose more than needs as the interchanged filaments are entangled with each other.

In any case, it is preferable that the elongation at rupture of the steel cord 10 is set in a range of 4.0 to 10.0 %, more preferably 6.0 to 8.0 %. Thereby, in the edge portion of the bead reinforcing layer 9, shear strain between the steel filaments of the cords is effectively decreased, and as a result the durability can be further improved.

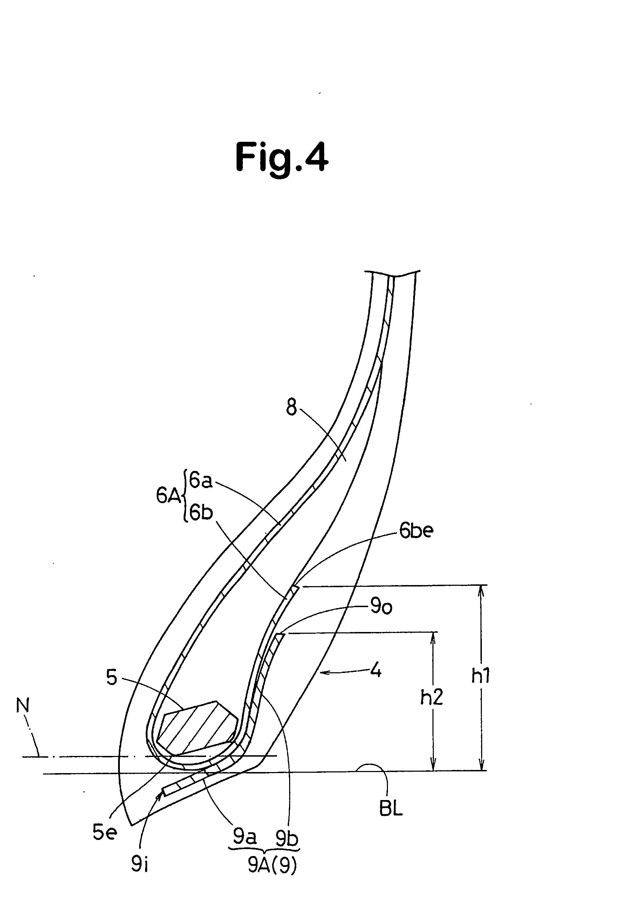

Fig.4 shows an example of the bead reinforcing layer 9 which is composed of the main part 9b and a base part 9a. The main part 9b is disposed on the axially outside of the carcass turned up portion 6b. The base part 9a extends on the radially inside of the bead core 5 while keeping a substantially constant distance from the bead bottom surface, and terminates before the bead toe. The radially inner end 9i of the bead reinforcing layer 9 is positioned radially inside the radially innermost end 5e of the bead core 5, in this example beneath the axially inner end of the bead core 5.

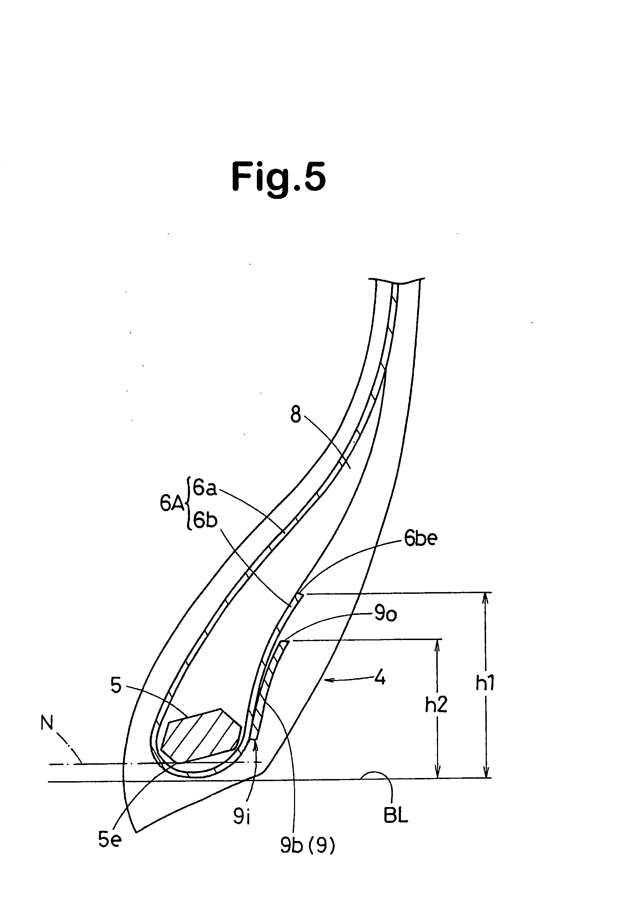

Fig.5 shows another example of the bead reinforcing layer 9 which is composed of only the main part 9b disposed on the axially outside of the carcass turned up portion 6b. The radially inner end 9i of the bead reinforcing layer 9 is positioned radially outside the radially innermost end 5e of the bead core 5, in this example beside the axially outer end of the bead core 5.

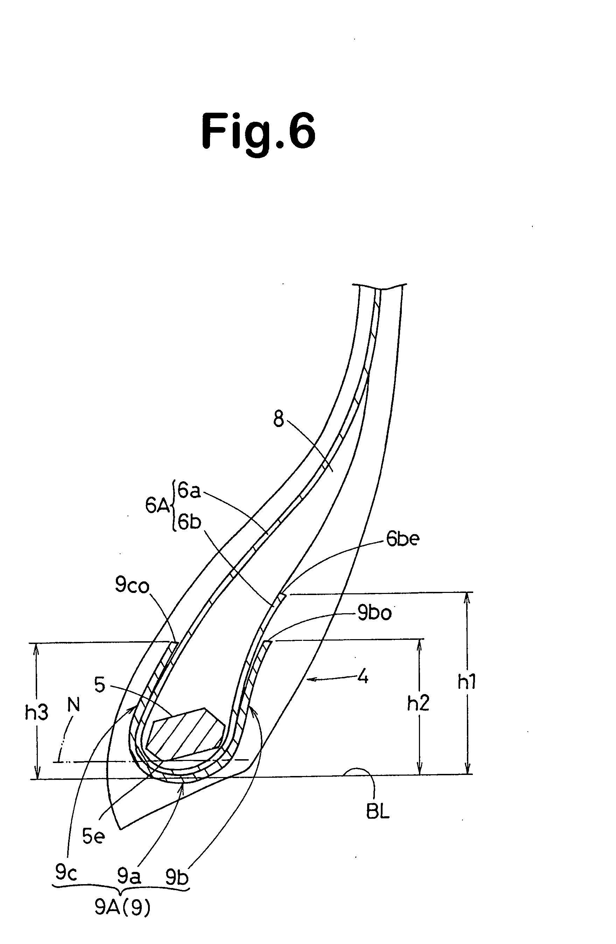

Fig.6 shows still another example of the bead reinforcing layer 9 which extends axially inwardly along the carcass 6 to a position axially inside the carcass main portion 6a. Therefore, the bead reinforcing layer 9 is composed of the main part 9b disposed on the axially outside of the carcass turned up portion 6b, a base part 9a radially inside the radially innermost end 5e of the bead core 5 (line N), and an axially inner folded part 9c disposed along the axially inside of the carcass main portion 6a. As a result, it has a U-shaped cross sectional shape.

The radially outer ends 9bo and 9co of the main part 9b and axially inner folded part 9c are positioned radially inside the radially outer end 6be of the carcass ply turned up portion 6b. The height h2 and h3 of the radially outer ends 9bo and 9co from the bead base line BL are preferably set in a range of from 7 to 30 %, more preferably 9 to 28 % of the tire section height H.

In Fig.6, the radially outer end 9co is positioned radially outside the radially innermost end 5e of the bead core. The height h2 and height h3 are the same, but they can differ from each other. This example can be suitably employed as the bead reinforcing layer 9 of a heavy duty tire for trucks and buses.

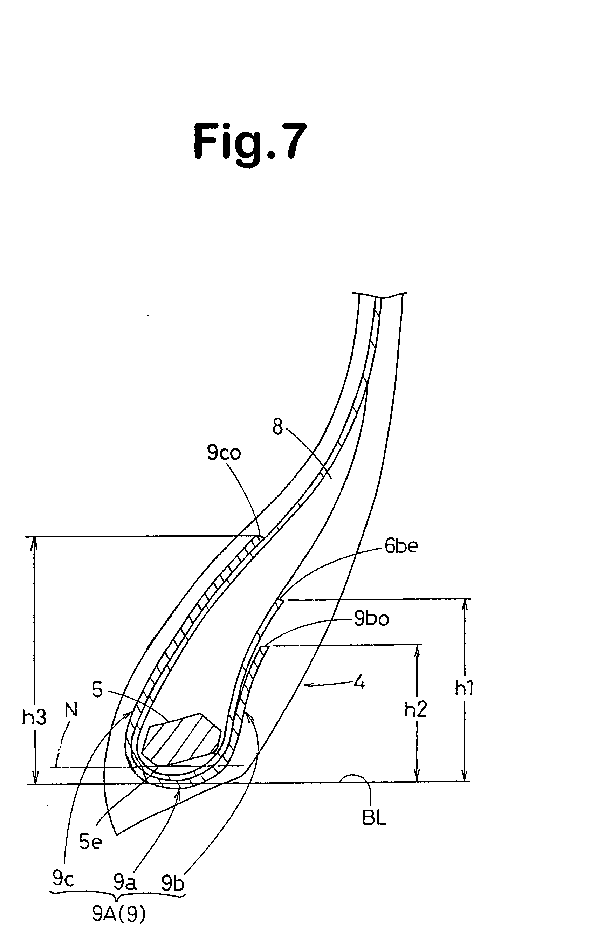

Fig.7 shows still another example of the bead reinforcing layer 9 which is a modification of the Fig.6 example. This example can be suitably employed as the bead reinforcing layer 9 of a heavy duty tire for dump trucks and the like used on rough roads under an extremely heavy load.

In this example, the height h2 of the main part 9b is set in a range of from 7 to 30 %, more preferably 9 to 28 % of the tire section height H. But, the height h3 of the axially inner folded part 9c is set to be more than the height h2 of the main part 9b (h3>h2) and the difference h3-h2 therebetween is set in a range of from 3 to 17 %, preferably 5 to 15 % of the tire section height H. Therefore, the axially inner folded part 9c is widely overlapped with a region of the carcass main portion 6a in which region a tensile stress is produced when the bead portion 4 is subjected to a large bending deformation. Accordingly, the bead portion 4 can be increased in the bending rigidity and the durability is further improved.

**Comparison Tests**

Test tires of size 11R22.5 14P having the same structure shown in Fig.1 except for the bead reinforcing layer were made and the following tests were made.

1) Rubber penetration test

The new test tire was disassembled and the steel cords were took out from the bead reinforcing layer together with the surrounding topping rubber. And the topping rubber was carefully removed from the surface of the cord. Then, adjacent two filaments were took out therefrom along 10 cm long using a knife, and the length of a part surrounded by the two took-out filaments and the remaining filaments into which the rubber completely penetrated was measured to obtain the percentage of this length to the total length of 10 cm as the rubber penetration %. The average of ten cords are shown in Table 1, wherein the larger the value, the better the rubber penetration.

2) Bead durability test

Using a tire test drum, the test tire mounted on a standard rim of size 8.25×22.5, inflated to 1000 kPa and loaded with a tire load of 88.3 kN was run at a speed of 20 km/h until the tire was broken and the running distance was measured.
The results are indicated in Table 1 by an index based on Prior art tire being 100, wherein the larger the index number, the better the bead durability.

3) Rust test and Residual strength test

A 2-D·4 wheel type truck provided on the drive wheels with test tires was run for 100,000 km and then the tire was disassembled and the steel cords in the bead reinforcing layer were visually inspected for rust. The results are shown in Table 1, wherein "Y" and "N" indicate "got rusty" and "not rusty", respectively.
Further, the steel cords were took out therefrom and measured for the rapture strength. The results are indicated as a percentage of the original strength.

4) Tire weight

The tire weights are indicated by an index based on Prior art tire being 100. The smaller the index number, the lighter the tire weight.

Table 1

| Tire | Prior art | Ref.1 | Ref.2 | Ex.1 | Ex.2 | Ex.3 |
|---|---|---|---|---|---|---|
| Bead reinforcing layer | Fig.4 | Fig.4 | Fig.4 | Fig.4 | Fig.4 | Fig.4 |
| Steel cord | | | | | | |
| Structure *1 | 3+7 | 1X10 | 1X10 | IB | IB | IB |
| Number of filaments | 10 | 10 | 10 | 10 | 10 | 10 |
| Filament dia. d (mm) | 0.2 | 0.2 | 0.2 | 0.2 | 0.2 | 0.2 |
| Shape index S | 0.73 | 0.32 | 0.72 | 0.5 | 0.38 | 0.67 |
| Test results | | | | | | |
| Tire weight | 100 | 105 | 100 | 100 | 102 | 100 |
| Rubber penetration(%) | core:0 core-sheath:100 | 100 | 60 | 100 | 100 | 95 |
| Bead durability | 100 | 135 | 105 | 135 | 135 | 120 |
| Rust | Y | N | Y | N | N | N |
| Residual cord strength (%) | 92 | 98.4 | 93.5 | 98 | 98.4 | 98.2 |

*1) IB: Interchange bunch twist
Tire section height H: 240 mm
Carcass turned up height h1: 36 mm (15% H)
Height h2: 26 mm (11% H)

The present invention can be suitably applied to heavy duty tires such as truck/bus radial tire, but the present invention can be also applied to pneumatic tires for light trucks, passenger cars, RV and the like.

**Claims**

1.  A pneumatic tire comprising

    a tread portion,
    a pair of sidewall portions,
    a pair of bead portions each with a bead core therein,
    a carcass ply extending between the bead portions and turned up around the bead core in each of the bead portions from the inside to the outside of the tire to form a pair of turned up portions and a main portion therebetween, and
    a bead reinforcing layer made of steel cords and disposed axially outside the turned up portion in each of the bead portions,
    each of the steel cords made of steel filaments gathered together to have a shape index in a range of from 0.35 to 0.70,

    wherein the shape index is the total of squared filament diameter of all the steel filaments which total is divided by the product of L1 and L2, wherein,
    in a cross section at a right angle to the longitudinal direction of the cord,

    L1 is the dimension of largest measure which occurs in one direction, and
    L2 is the dimension measured perpendicularly to this direction.

2.  A pneumatic tire according to claim 1, wherein
    the steel filaments have a diameter in a range of from 0.10 to 0.50 mm.

3.  A pneumatic tire according to claim 1, wherein
    the number of the steel filaments per a cord is in a range of from 6 to 12.

4.  A pneumatic tire according to claim 1, wherein
    the bead reinforcing layer has a radially inner end at a position axially outside the carcass turned up portion.

5.  A pneumatic tire according to claim 1, wherein
    the bead reinforcing layer has a radially inner end at a position radially inside the bead core.

6.  A pneumatic tire according to claim 1, wherein
    the bead reinforcing layer extends to a position axially inside the carcass main portion.

7.  A pneumatic tire according to claim 1, wherein
    the elongation at rupture of the steel cord is in a range of from 4.0 to 10.0.

8.  A pneumatic tire according to claim 1, wherein
    the elongation at rupture of the steel cord is in a range of from 6.0 to 8.0.

# Fig.1

# Fig.2

# Fig.3

# Fig.4

# Fig.5

# Fig.6

# Fig.7

# Fig.8